# EUROPÄISCHE PATENTSCHRIFT

(11) **EP 3 875 005 B1**
(45) Veröffentlichungstag und Bekanntmachung des Hinweises auf die Patenterteilung: **26.07.2023**
(21) Anmeldenummer: 20161014.4
(22) Anmeldetag: 04.03.2020
(51) Int. Cl.: A47J 37/07, A47J 37/06

(54) **GRILL**
GRILL
GRIL

(43) Veröffentlichungstag der Anmeldung: 08.09.2021
(60) Teilanmeldung: 22178122.2
(73) Patentinhaber: TEST RITE tepro GmbH, 63322 Rödermark (DE)
(72) Erfinder: Shih, Yu-Yi, Xinyi District Taipei City (TW)
(74) Vertreter: Feucker, Max Martin

(56) Entgegenhaltungen:
- EP-A1- 2 301 397
- DE-A1-102016 120 187
- US-A- 4 662 349
- US-A- 5 806 412
- Enders De: "TM SWITCH GRID TM KANSAS BLACK PRO 3 K TURBO GASGRILL WWW.ENDERS-GERMANY.COM", , 11 April 2018 (2018-04-11), XP055941619, Hornbach.de Retrieved from the Internet: URL:www.hornbach.de/data/shop/D04/001/780/ 491/314/081/6632071_Doc_01_DE_201801312058 40.pdf [retrieved on 2022-07-12]
- Enders: "Gasgrill Boston Pro 4 Turbo II", , 24 April 2019 (2019-04-24), XP055965691, Retrieved from the Internet: URL:https://www.manualslib.de/manual/81325 9/Bbq-Boston-Pro-4-Turbo-Ii.html [retrieved on 2022-09-28]

## Beschreibung

Die vorliegende Erfindung betrifft einen Grill, umfassend einen Garraum, mindestens eine in dem Garraum angeordnete Grillfläche, wie Grillrost oder Grillplatte, mindestens einen unterhalb der Grillfläche angeordneten ersten Gasbrenner, mindestens einen unterhalb der Grillfläche angeordneten zweiten Gasbrenner, wobei bevorzugt eine maximale Wärmeleistung des zweiten Gasbrenners größer ist als eine maximale Wärmeleistung des ersten Gasbrenners. Der Grill umfasst zudem mindestens ein zwischen der Grillfläche und einem ersten Gasbrenner angeordnetes (insbesondere erstes) Blech, welches Öffnungen mit einer ersten Gesamtöffnungsfläche aufweisen kann. Der Grill umfasst zudem mindestens ein zwischen der Grillfläche und einem zweiten Gasbrenner angeordnetes (insbesondere zweites) Blech, welches Öffnungen mit einer zweiten Gesamtöffnungsfläche aufweist.

Das oder die zwischen den Gasbrennern und der Grillfläche angeordnete(n) Blech(e) dient/dienen in der Regel dazu, von dem auf der Grillfläche gegarten Grillgut herabtropfendes Fett aufzufangen und abzulenken, so dass das herabtropfende Fett nicht unmittelbar auf den jeweiligen Gasbrenner trifft. Die Bleche werden zudem von dem zugehörigen Brenner erwärmt und emittieren Wärmestrahlung, mit der das Grillgut erhitzt wird. Durch die Bleche werden aber auch die von den Gasbrennern erzeugten heißen Gase umgelenkt, so dass die Erwärmung des Grillguts durch Konvektion beeinflusst wird. Es ist daher bekannt, dass in den Blechen Öffnungen ausgebildet sind, durch die die heißen Gase aufsteigen können. Entsprechende Grillvorrichtungen sind aus der Gebrauchsanleitung "Kansas Black Pro 3 K Turbo Gasgrill" (Online), Enders Germany, 11.04.2018 (am 27.01.2022 abgerufen), DE 10 2016 120187 A1 und US 4 662 349 A bekannt.

Es ist zudem bekannt, dass die Gasbrenner eine unterschiedlich starke Erhitzung des Grillguts ermöglichen. Hierzu weist in der Regel zumindest ein Gasbrenner eine höhere maximale Wärmeleistung auf als die übrigen Gasbrenner. Es besteht aber weiterhin der Wunsch, die Temperatur an der Grillfläche im Bereich oberhalb zumindest eines Gasbrenners im Vergleich zu dem Bereich oberhalb eines weiteren Gasbrenners zu erhöhen. EP 2 301 397 A1 offenbart einen Grill, der umfasst einen Garraum, mindestens eine in dem Garraum angeordnete Grillfläche, mindestens einen unterhalb der Grillfläche angeordneten ersten Gasbrenner, mindestens einen unterhalb der Grillfläche angeordneten zweiten Gasbrenner, mindestens ein zwischen der Grillfläche und einem ersten Gasbrenner angeordnetes, welches oberhalb des ersten Gasbrenners Öffnungen mit einer ersten Gesamtöffnungsfläche aufweist, mindestens ein zwischen der Grillfläche und einem zweiten Gasbrenner angeordnetes Blech, welches oberhalb des zweiten Gasbrenners Öffnungen mit einer zweiten Gesamtöffnungsfläche aufweist, wobei die zweite Gesamtöffnungsfläche des Blechs oberhalb des zweiten Gasbrenners größer ist als die erste Gesamtöffnungsfläche des oberhalb des ersten Gasbrenners. Die Bedienungsanleitung "Gasgrill Boston Pro 4 Turbo II", (Online), Enders Germany, 24.04.2019 (am 27.01.2022 abgerufen), offenbart einen Grill, der umfasst einen Garraum, mindestens eine in dem Garraum angeordnete Grillfläche, mindestens einen unterhalb der Grillfläche angeordneten ersten Gasbrenner, mindestens einen unterhalb der Grillfläche angeordneten zweiten Gasbrenner, mindestens ein zwischen der Grillfläche und einem ersten Gasbrenner angeordnetes Blech, welches oberhalb des ersten Gasbrenners Öffnungen mit einer ersten Gesamtöffnungsfläche aufweist, mindestens ein zwischen der Grillfläche und einem zweiten Gasbrenner angeordnetes Blech, welches oberhalb des zweiten Gasbrenners Öffnungen mit einer zweiten Gesamtöffnungsfläche aufweist, wobei eine maximale Wärmeleistung des zweiten Gasbrenners größer ist als eine maximale Wärmeleistung des ersten Gasbrenners.

Aufgabe der vorliegenden Erfindung ist es daher, die mit Bezug zum Stand der Technik geschilderten Nachteile zu beseitigen und insbesondere einen Grill anzugeben, bei dem zumindest in einem Bereich der Grillfläche eine höhere Temperatur erreicht werden kann als in einem anderen Bereich der Grillfläche.

Gelöst wird die Aufgabe durch einen Grill mit den Merkmalen des unabhängigen Anspruchs 1. Vorteilhafte Weiterbildungen des Grills sind in den abhängigen Ansprüchen und in der Beschreibung angegeben, wobei einzelne Merkmale der vorteilhaften Weiterbildungen in technisch sinnvoller Weise miteinander kombinierbar sind.

Die Erfindung sieht in ihrem Grundgedanken also vor, dass oberhalb des zweiten Gasbrenners größere und/oder mehr Öffnungen ausgebildet sind, durch die die heißen Gase aufsteigen können. Dies hat zur Folge, dass nicht nur die durch den zweiten Gasbrenner erzeugten heißen Gase durch die Öffnungen oberhalb des zweiten Gasbrenners durchtreten können, sondern dass auch eine Art Kamineffekt erzeugt wird, so dass von dem mindestens einen ersten Gasbrenner erzeugte heiße Gase zunächst unterhalb des mindestens einen Blechs zum zweiten Gasbrenner strömen und dort durch die Öffnungen oberhalb des zweiten Gasbrenners heraustreten. Somit kann die Grillfläche oberhalb des zweiten Brenners stärker erwärmt werden als die Grillfläche oberhalb des mindestens einen ersten Gasbrenners.

Die erste Gesamtöffnungsfläche ergibt sich also aus der Summe der Öffnungsflächen mehrerer oberhalb eines ersten Gasbrenners angeordneter Öffnungen, wobei jedem ersten Gasbrenner eine erste Gesamtöffnungsfläche zugeordnet ist. Die zweite Gesamtöffnungsfläche ergibt sich demgegenüber aus der Summe der Flächen der Öffnungen der dem zweiten Gasbrenner zugeordneten Öffnungen.

Es ist bevorzugt, dass die zweite Gesamtöffnungsfläche mindestens das zweifache, besonders bevorzugt mindestens das dreifache der einem ersten Gasbrenner zugeordneten ersten Gesamtöffnungsfläche beträgt.

Die dem zweiten Gasbrenner zugeordneten Öffnungen sind bevorzugt hintereinander entlang einer Längserstreckung des zweiten Gasbrenners ausgebildet, so dass über der Gesamtlängserstreckung des Gasbrenners Öffnungen ausgebildet sind.

In diesem Zusammenhang ist insbesondere bevorzugt, dass mehrere Reihen von Öffnungen in der Längserstreckungsrichtung des zweiten Gasbrenners hintereinander angeordnet sind, wobei jede Reihe bevorzugt mindestens vier Öffnungen aufweist, wobei die Reihen quer zur Längserstreckungsrichtung des zweiten Gasbrenners ausgerichtet sind.

Oberhalb des mindestens einen Gasbrenners sind aber bevorzugt entweder keine Offnungen in einem ersten Drittel des Blechs ausgebildet, wobei das erste Drittel ausgehend von dem Gasanschluss des zugehörigen ersten Gasbrenners gemeint ist. Keine Öffnungen sind insbesondere oberhalb der Gasaustrittsöffnungen des zugehörigen Gasbrenners ausgebildet, so dass der erste Gasbrenner vor herunterfallendem Fett/Grillgut geschützt ist, gleichzeitig aber eine Wärmeverteilung erfolgt.

Es ist zudem insbesondere vorgesehen, dass zwischen dem Gasbrenner und den zugehörigen Öffnungen in dem/den Blech(en), sowie zwischen den Öffnungen des Blechs/der Bleche und der Grillfläche keine weiteren Einbauten vorgesehen sind, die eine Strömung der aufsteigenden heißen Gase beeinflussen. Insbesondere sind keine Gitter, Netze oder Ähnliches ausgebildet.

In einer Ausführungsform kann vorgesehen sein, dass die maximale Wärmeleistung des zweiten Gasbrenners mindestens das 1,1fache, bevorzugt mindestens das 1,3fache und besonders bevorzugt mindestens das 1,35fache der ersten maximalen Wärmeleistung eines ersten Gasbrenners beträgt.

Es kann zudem vorgesehen sein, dass jedem Gasbrenner mindestens ein oder genau ein Blech zugeordnet ist. In diesem Fall sind die die erste Gesamtöffnungsfläche ausbildenden Öffnungen also in dem oder den dem jeweiligen Gasbrenner zugeordneten Blech(en) ausgebildet. Dementsprechend ist also jedem ersten Gasbrenner mindestens ein erstes Blech zugeordnet, welches zwischen dem ersten Gasbrenner und der Grillfläche angeordnet ist, während jedem zweiten Gasbrenner mindestens ein zweites Blech zugeordnet ist, welches zwischen dem zweiten Gasbrenner und der Grillfläche angeordnet ist. Die Bleche sind also von dem jeweiligen Gasbrenner beabstandet, beispielsweise mindestens 2 cm oder sogar mindesten 5 cm.

Die den ersten Gasbrennern zugeordneten ersten Bleche sind bevorzugt unmittelbar aneinander angrenzend angeordnet, so dass allenfalls ein sehr geringer Spalt zwischen den ersten Blechen ausgebildet ist. Demgegenüber kann vorgesehen sein, dass zwischen dem einen ersten Blech und dem zweiten Blech ein Abstand von mindestens 1cm, bevorzugt von mindestens 2 cm oder von mindestens 3 cm ausgebildet ist. Wenn der Abstand zwischen den Gasbrennern gleich ist, so weisen die ersten Bleche jeweils eine größere Breite auf als das zweite Blech.

Die den Gasbrennern zugeordneten Bleche haben bevorzugt eine satteldachähnliche Gestalt mit schräg zueinander angeordneten Flächen, wobei sich die Biegelinie zwischen den schräg angeordneten Flächen parallel entlang des zugehörigen Gasbrenners erstreckt. Die Bleche sind dabei bevorzugt so ausgebildet, dass die Biegelinie im montierten Zustand insbesondere von der Vorderseite zur Rückseite des Grills abfällt, so dass herabtropfendes Fett tendenziell auch nach hinten abfließt.

In einer Ausführungsform umfasst der zweite Gasbrenner ein Brennerrohr und ein unmittelbar oberhalb des Brennerrohrs angeordnetes Brennerblech, wobei das Brennerblech das Brennerrohr zumindest abschnittsweise überdeckt. Das Brennerrohr erstreckt sich insbesondere länglich und weist bevorzugt an beiden gegenüberliegenden Seiten Gasaustrittsöffnungen auf, die hintereinander angeordnet sind. Das Brennerblech ist insbesondere unmittelbar an dem Brennerrohr befestigt und überdeckt das Brennerrohr quer zu seiner Längserstreckung insbesondere vollständig. Zudem überdeckt das Brennerblech das Brennerrohr mindestens über die Hälfte, bevorzugt mindestens über dreiviertel seiner Länge. Das Brennerblech schützt somit das Brennerrohr vor herabfallendem Fett/Grillgut, sodass durch die Öffnungen in dem oberhalb des zweiten Brenners angeordneten Blech hindurchtropfendes Fett nicht die Gasaustrittsöffnungen verschließen kann. Zudem wird auch das Brennerblech durch die an den Gasaustrittsöffnungen entstehenden Flammen erhitzt und sorgt somit für eine Wärmeverteilung.

Das Brennerblech weist insbesondere einen ebenen und oberhalb des Brennerrohrs angeordneten Zentralbereich und zumindest zwei nach unten abgewinkelte Randbereiche aufweist, wobei bevorzugt in den Randbereichen Flammöffnungen ausgebildet sind. Der abgewinkelte Randbereich erstreckt sich insbesondere von oben bis zur Mitte des Brennerrohres und endet somit bevorzugt in der Ebene der Gasaustrittsöffnungen des Brennerrohres. Dabei ist der Rand des abgewinkelten Randbereichs von dem Brennerrohr beabstandet, sodass Flammen zwischen dem abgewinkelten Randbereich und der Außenseite des Brennerrohres eintreten können. In diesem Zusammenhang sind insbesondere länglich geformte Schlitze als Flammenaustrittsöffnungen ausgebildet, durch die die Flammen heraustreten können.

Die Erfindung sowie das technische Umfeld werden im Folgenden anhand der Figuren beispielhaft erläutert. Die Figuren zeigen schematisch
- Figur 1:: einen Grill,
- Figur 2:: eine teilweise Explosionsansicht des Grills,
- Figur 3:: zwei erste Bleche und ein zweites Blech des Grills
- Figur 4:: eine Aufsicht auf das zweite Blech,
- Figur 5:: einen zweiten Gasbrenner mit einem Brennerohr und einem Brennerblech und
- Figur 6:: das Brennerblech.

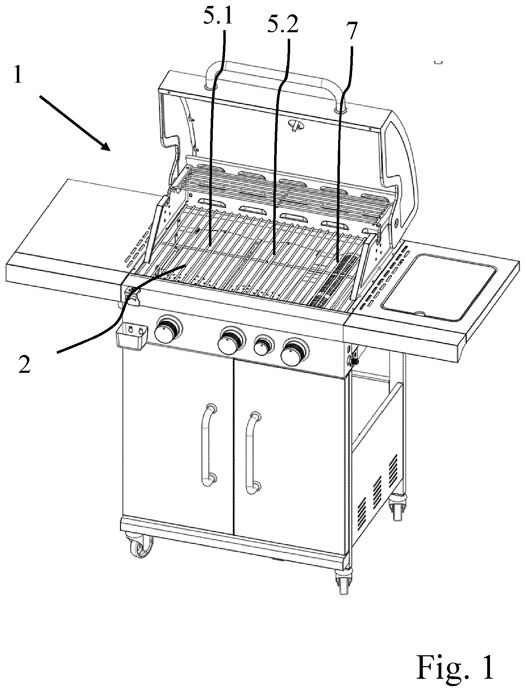

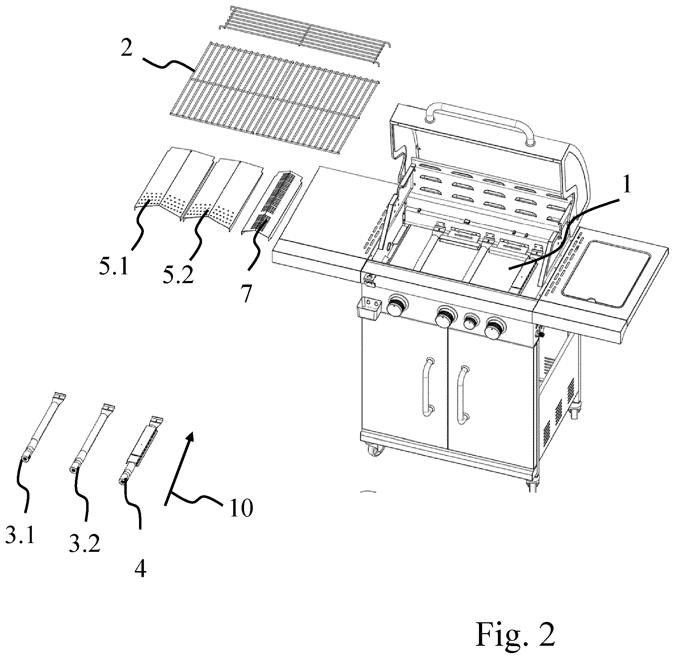

Der in den Figuren 1 und 2 dargestellte Grill umfasst einen Garraum 1, wobei unten in dem Garraum 1 zwei erste Gasbrenner 3.1 und 3.2 mit jeweils einer ersten maximalen Wärmeleistung und ein zweiter Gasbrenner 4 mit einer zweiten maximalen Wärmeleistung angeordnet sind. Die Gasbrenner 3.1, 3.2 und 4 erstrecken sich jeweils in einer Längserstreckungsrichtung 10.

Oberhalb der Gasbrenner 3.1, 3.2 und 4 ist jeweils ein Blech angeordnet. Hierbei ist dem ersten Gasbrenner 3.1 ein erstes Blech 5.1, dem zweiten Gasbrenner 3.2 ein erstes Blech 5.2 sowie dem zweiten Gasbrenner 4 ein zweites Blech 7 mit einem Abstand zugeordnet. Oberhalb der Bleche 5.1, 5.2 und 7 ist eine als Grillrost ausgebildete Grillfläche 2 in dem Garraum 1 angeordnet.

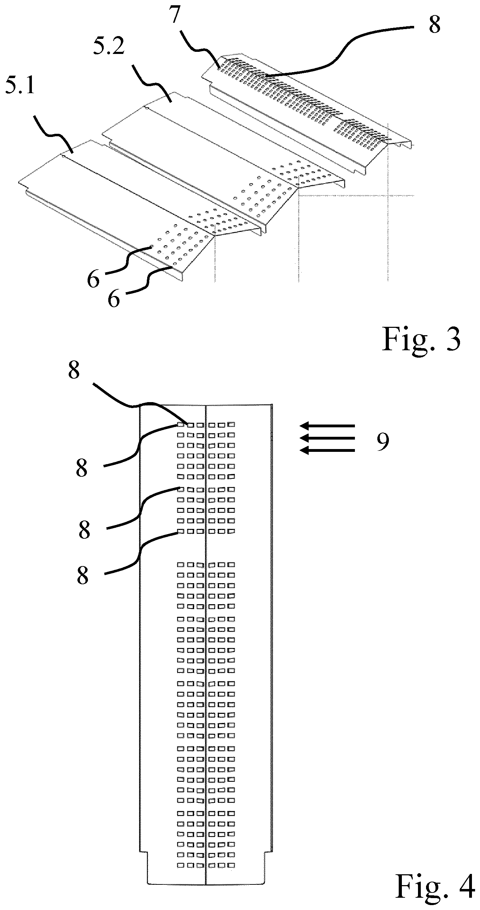

In der Figur 3 sind die ersten Bleche 5.1 und 5.2 sowie das zweite Blech 7 im Detail dargestellt. Es ist zu erkennen, dass die ersten Bleche 5.1 und 5.2 Öffnungen 6 aufweisen, die lediglich in einem ersten Drittel der ersten Bleche 5.1 und 5.2 angeordnet sind, so dass die übrigen zwei Drittel die darunter angeordneten Brenner vor herabtropfendem Fett schützen. Alle Öffnungen 6 des ersten Blechs 5.1 weisen zusammen eine erste Gesamtöffnungsfläche auf. Alle Öffnungen 6 des ersten Blechs 5.2 weisen zusammen ebenfalls eine erste Gesamtöffnungsfläche auf. Das zweite Blech weist hingegen eine wesentlich höhere Anzahl von Öffnungen 8 auf. Wie aus der Figur 4 zu erkennen ist, sind die Öffnungen 8 in Reihen 9 angeordnet, wobei die Reihen 9 in Längserstreckungsrichtung 10 des zweiten Gasbrenners 4 hintereinander angeordnet sind. Alle Öffnungen 8 des zweiten Blechs 7 weisen zusammen eine zweite Gesamtöffnungsfläche auf.

Die Gesamtöffnungsfläche der Öffnungen 8 des zweiten Blechs sind nun grö-ßer als jeweils die erste Gesamtöffnungsfläche der Öffnungen 6 des ersten Blechs 5.1 und der ersten Gesamtöffnungsfläche der Öffnungen 6 des zweiten Blechs 5.2. Im Betrieb hat dies den Effekt, dass die durch die ersten Brenner 5.1 und 5.2 erzeugten heißen Gase zumindest zum Teil quer zur Längserstreckungsrichtungsrichtung 10 der Gasbrenner 3.1 und 3.2 in Richtung des zweiten Gasbrenners 4 strömen und durch die Öffnungen 8 des zweiten Blechs 7 sowie seitlich von dem zweiten Blech 7 aufsteigen. Dies hat zur Folge, dass ein oberhalb des zweiten Gasbrenners 4 ausgebildeter Abschnitt der Grillfläche 2 eine höhere Temperatur aufweisen kann als die den ersten Gasbrennern 3.1 und 3.2 zugeordneten Abschnitte der Grillfläche 2. Diese lokal höhere Temperatur der Grillfläche 2 kann zudem noch dadurch verstärkt werden, dass die maximale Wärmeleistung des zweiten Gasbrenners 4 größer ist als die maximale Wärmeleistung der ersten Gasbrenner 3.1 und 3.2.

Aus Figur 3 ist zudem noch zu erkennen, dass die Bleche 5.1, 5.2 und 7 eine satteldachähnliche Form haben, wobei sich die Biegelinie zwischen den schräg zueinander angeordneten Flächen entlang der Längserstreckung 10 erstrecken und von der Vorderseite des Grills zur Rückseite nach hinten abfallen.

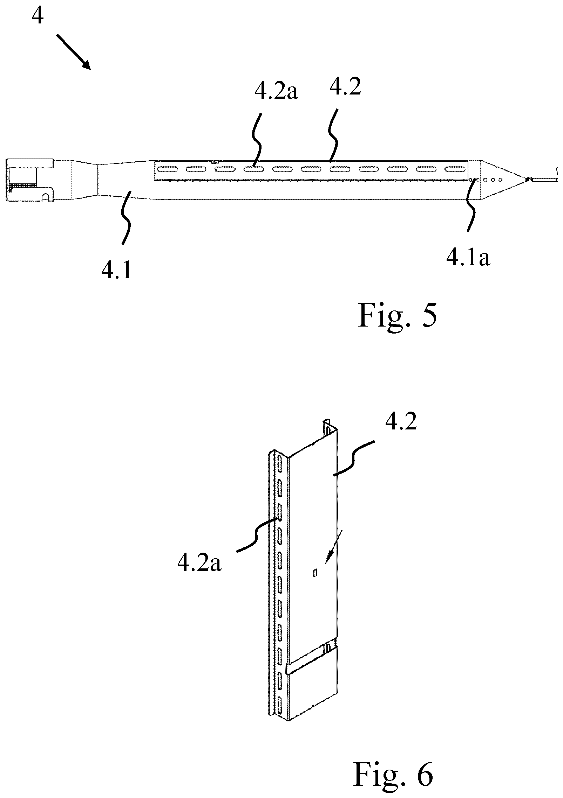

Im Unterschied zu den ersten Gasbrennern 3.1 und 3.2 weist der zweite Gasbrenner 4 zusätzlich zu einem Brennerrohr 1 ein Brennerblech 4.2 auf, wie es in den Figuren 5 und 6 dargestellt ist. Das Brennerrohr 4.1 weist mehrere entlang seiner Längserstreckung hintereinander an den Seiten angeordnete Gasaustrittsöffnungen 4.1a auf. Das Brennerblech 4.2 ist mit einem ebenen Zentralbereich unmittelbar auf der Oberseite des Brennerrohres 4.1 befestigt. Das Brennerblech 4.2 weist zudem abgewinkelte Randbereiche auf, die sich seitlich von dem Brennerrohr 4.1 nach unten bis etwa zur Mitte des Brennerrohres 4.1 erstrecken. Der untere Rand des Randbereiches ist dabei von der Seite des Brennerrohres 4.1 und somit von den Gasaustrittsöffnungen 4.1a in vertikaler Richtung beabstandet. In dem Randbereich sind Flammöffnungen 4.2a ausgebildet, durch welche Flammen hindurchtreten können. Das Brennerblech 4.2 schützt somit das Brennerrohr 4.1 vor Fett, welches durch die Öffnungen 8 im zweiten Blech 7 im Betrieb hindurch tropfen könnte. Gleichzeitig sorgt das Brennerblech 4.2 für eine gleichmäßigere Wärmeverteilung.

### Bezugszeichenliste

- 1: Garraum
- 2: Grillfläche
- 3.1, 3.2: erster Gasbrenner
- 4: zweiter Gasbrenner
- 4.1: Brennerrohr
- 4.2: Brennerblech
- 4.1a: Gasaustrittsöffnungen
- 4.2a: Flammöffnungen
- 5.1, 5.2: erstes Blech
- 6: Öffnungen im ersten Blechen
- 7: zweites Blech
- 8: Öffnungen im zweiten Blech
- 9: Reihe
- 10: Längserstreckungsrichtung

## Patentansprüche

1. Grill, umfassend:
- einen Garraum (1),
- mindestens eine in dem Garraum (1) angeordnete Grillfläche (2),
- mindestens einen unterhalb der Grillfläche (2) angeordneten ersten Gasbrenner (3),
- mindestens einen unterhalb der Grillfläche (2) angeordneten zweiten Gasbrenner (4),
- mindestens ein zwischen der Grillfläche (2) und einem ersten Gasbrenner (3) angeordnetes Blech (5.1, 5.2), welches oberhalb des ersten Gasbrenners (3) Öffnungen (6) mit einer ersten Gesamtöffnungsfläche aufweist,
- mindestens ein zwischen der Grillfläche (2) und einem zweiten Gasbrenner (4) angeordnetes Blech (7), welches oberhalb des zweiten Gasbrenners (4) Öffnungen (8) mit einer zweiten Gesamtöffnungsfläche aufweist,
wobei
die zweite Gesamtöffnungsfläche des Blechs (7) oberhalb des zweiten Gasbrenners (4) größer ist als die erste Gesamtöffnungsfläche des Blechs (5.1, 5.2) oberhalb des ersten Gasbrenners (3), wobei eine maximale Wärmeleistung des zweiten Gasbrenners (4) größer ist als eine maximale Wärmeleistung des ersten Gasbrenners (3.1, 3.2) und wobei oberhalb des ersten Gasbrenners (3) ausschließlich Öffnungen (6) in einem ersten Drittel des Blechs (5.1, 5.2) ausgebildet sind.

2. Grill nach Anspruch 1, wobei die zweite Gesamtöffnungsfläche mindestens das doppelte, bevorzugt mindestens das dreifache der ersten Gesamtöffnungsfläche beträgt.

3. Grill nach Anspruch 1 oder 2, wobei mindestens 10, bevorzugt mindestens 15 Öffnungen (8) oberhalb des zweiten Gasbrenners (4) hintereinander entlang einer Längserstreckungsrichtung des zweiten Gasbrenners (4) ausgebildet sind.

4. Grill nach Anspruch 3, wobei die Öffnungen (8) in jeweils mindestens 4 Öffnungen (8) aufweisenden Reihen (9) angeordnet sind, wobei die Reihen (9) quer zu der Längserstreckungsrichtung (10) des zweiten Gasbrenners (4) ausgerichtet sind.

5. Grill nach einem der vorhergehenden Ansprüche, wobei das einem Gasbrenner (3, 4) zugeordnete Blech (5.1, 5.2, 7) eine satteldachähnliche Gestalt aufweist und sich entlang des zugehörigen Gasbrenners (3, 4) erstreckt.

6. Grill nach einem der vorhergehenden Ansprüche, wobei die maximale Wärmeleistung des zweiten Gasbrenners (4) mindestens das 1,1 fache, bevorzugt mindestens das 1,3fache, besonders bevorzugt mehr als das 1,35 fache der ersten maximalen Wärmeleistung des ersten Gasbrenners (3.1, 3.2) beträgt.

7. Grill nach einem der vorhergehenden Ansprüche, wobei zwischen der Grillfläche (2) und einem ersten Gasbrenner (3) mindestens ein erstes Blech (5.1, 5.2) angeordnet ist, welches die Öffnungen (6) mit der ersten Gesamtöffnungsfläche aufweisen kann, und wobei zwischen der Grillfläche (2) und dem zweiten Gasbrenner (4) mindestens ein zweites Blech (7) angeordnet ist, welches die Öffnungen (8) mit der zweiten Gesamtöffnungsfläche aufweist.

8. Grill nach einem der vorhergehenden Ansprüche, wobei der zweite Gasbrenner (4) ein Brennerrohr (4.1) und ein unmittelbar oberhalb des Brennerrohrs (4.1) angeordnetes Brennerblech (4.2) umfasst, wobei das Brennerblech (4.2) das Brennerrohr (4.1) zumindest abschnittsweise überdeckt.

9. Grill nach Anspruch 8, wobei das Brennerblech (4.2) einen ebenen und oberhalb des Brennerrohrs (4.1) angeordneten Zentralbereich und zumindest zwei nach unten abgewinkelte Randbereiche aufweist, wobei bevorzugt in den Randbereichen Flammöffnungen (4.2a) ausgebildet sind.

## Claims

1. A grill including
- a cooking space (1),
- at least one grill surface (2) arranged in the cooking space (1),
- at least one first gas burner (3) arranged below the grill surface (2),
- at least one second gas burner (4) arranged below the grill surface (2),
- at least one sheet (5.1, 5.2) arranged between the grill surface (2) and a first gas burner (3), which above the first gas burner (3) has apertures (6) with a first total aperture area,
- at least one sheet (7) arranged between the grill surface (2) and a second gas burner (4), which above the second gas burner (4) has apertures (8) with a second total aperture area,
wherein
the second total aperture area of the sheet (7) above the second gas burner (4) is larger than the first total aperture area of the sheet (5.1, 5.2) above the first gas burner (3), wherein a maximum heat output of the second gas burner (4) is greater than a maximum heat output of the first gas burner (3.1, 3.2) and wherein above the first gas burner (3) apertures (6) are exclusively formed in a first third of the sheet (5.1, 5.2).

2. The grill according to claim 1, wherein the second total aperture area is at least twice that, preferably at least three times that of the first total aperture area.

3. The grill according to claim 1 or 2, wherein at least 10, preferably at least 15 apertures (8) are formed above the second gas burner (4) one behind the other along a longitudinal direction of extension of the second gas burner (4).

4. The grill according to claim 3, wherein the apertures (8) are arranged in rows (9) each row having at least 4 apertures (8), wherein the rows (9) are aligned transversely to the longitudinal direction of extension (10) of the second gas burner (4).

5. The grill according to one of the preceding claims, wherein the sheet (5.1, 5.2, 7) assigned to a gas burner (3, 4) has a shape similar to a saddle roof and extends along the associated gas burner (3, 4).

6. The grill according to one of the preceding claims, wherein the maximum heat output of the second gas burner (4) is at least 1.1 times, preferably at least 1.3 times, especially preferably more than 1.35 times that of the first maximum heat output of the first gas burner (3.1, 3.2).

7. The grill according to one of the preceding claims, wherein at least one first sheet (5.1, 5.2) is arranged between the grill surface (2) and a first gas burner (3), which may have the apertures (6) with the first total aperture area, and wherein at least a second sheet (7) is arranged between the grill surface (2) and the second gas burner (4), which has the apertures (8) with the second total aperture area.

8. The grill according to one of the preceding claims, wherein the second gas burner (4) includes a burner tube (4.1) and a burner plate (4.2) arranged directly above the burner tube (4.1), wherein the burner plate (4.2) covers the burner tube (4.1) at least in sections.

9. The grill according to claim 8, wherein the burner plate (4.2) has a planar central area arranged above the burner tube (4.1) and at least two downwardly angled edge areas, wherein the edge areas preferably have flame apertures (4.2a) arranged in them.

## Revendications

1. Ensemble de grill, comprenant :
- un espace de cuisson (1),
- au moins une surface de grill (2) disposée dans l'espace de cuisson (1),
- au moins un premier brûleur à gaz (3) disposé en dessous de la surface de grill (2),
- au moins un deuxième brûleur à gaz (4) disposé en dessous de la surface de grill (2),
- au moins une tôle (5.1, 5.2) disposée entre la surface de grill (2) et un premier brûleur à gaz (3), laquelle comporte au-dessus du premier brûleur à gaz (3), des ouvertures (6) avec une première surface d'ouverture totale,
- au moins une tôle (7) disposée entre la surface de grill (2) et un deuxième brûleur à gaz (4), laquelle comporte au-dessus du deuxième brûleur à gaz (4), des ouvertures (8) avec une deuxième surface d'ouverture totale,
sachant que
la deuxième surface d'ouverture totale de la tôle (7) au-dessus du deuxième brûleur à gaz (4) est plus grande que la première surface d'ouverture totale de la tôle (5.1, 5.2) au-dessus du premier brûleur à gaz (3), sachant qu'une production de chaleur maximale du deuxième brûleur à gaz (4) est plus grande qu'une production de chaleur maximale du premier brûleur à gaz (3.1, 3.2) et sachant que les ouvertures (6) ne sont exclusivement constituées qu'au-dessus du premier brûleur à gaz (3) dans un premier tiers de la tôle (5.1, 5.2).

2. Ensemble de grill selon la revendication 1, sachant que la deuxième surface d'ouverture totale est au moins le double, de préférence au moins le triple de la première surface d'ouverture totale.

3. Ensemble de grill selon la revendication 1 ou 2, sachant qu'au moins 10, de préférence 15 ouvertures (8) sont constituées au-dessus du deuxième brûleur à gaz (4) les unes derrière es autres le long d'une direction d'extension longitudinale du deuxième brûleur à gaz (4).

4. Ensemble de grill selon la revendication 3, sachant que les ouvertures (8) sont disposées en rangées (9) comportant respectivement au moins 4 ouvertures (8), sachant que les rangées (9) sont orientées transversalement à la direction d'extension longitudinale (10) du deuxième brûleur à gaz (4).

5. Ensemble de grill selon l'une quelconque des revendications précédentes, sachant que la tôle (5.1, 5.2, 7) attribuée à un brûleur à gaz (3, 4) comporte une structure semblable à deux pans et s'étend le long du brûleur à gaz (3, 4) correspondant.

6. Ensemble de grill selon l'une quelconque des revendications précédentes, sachant que la production de chaleur maximale du deuxième brûleur à gaz (4) est au moins de 1,1 fois, de préférence d'au moins 1,3 fois, en particulier de préférence de plus de 1,35 fois la première production de chaleur maximale du premier brûleur à gaz (3.1, 3.2).

7. Ensemble de grill selon l'une quelconque des revendications précédentes, sachant qu'au moins une première tôle (5.1, 5.2) est disposée entre la surface de grill (2) et un premier brûleur à gaz (3), laquelle peut comporter les ouvertures (6) avec la première surface d'ouverture totale et sachant qu'au moins une deuxième tôle (7) est disposée entre la surface de grill (2) et le deuxième brûleur à gaz (4), laquelle comporte les ouvertures (8) avec la deuxième surface d'ouverture totale.

8. Ensemble de grill selon l'une quelconque des revendications précédentes, sachant que le deuxième brûleur à gaz (4) comprend un conduit de brûleur (4.1) et une tôle de brûleur (4.2) disposée directement au-dessus du conduit de brûleur (4.1), sachant que la tôle de brûleur (4.2) recouvre au moins en partie le conduit de brûleur (4.1).

9. Ensemble de grill selon la revendication 8, sachant que la tôle de brûleur (4.2) comporte une zone centrale plane et disposée au-dessus du conduit de brûleur (4.1) et au moins deux zones de bord courbées vers le bas, sachant que des ouvertures de flammes (4.2a) sont de préférence constituées dans les zones de bord.
